# EUROPEAN PATENT APPLICATION

(11) **EP 1 533 433 A1**
(43) Date of publication of application: **25.05.2005**
(21) Application number: 03027020.1
(22) Date of filing: 24.11.2003
(51) Int. Cl.: E04C 2/34, B32B 3/18, B32B 15/08

(54) **Sandwich panel and a method of producing a sandwich panel**

(71) Applicant: Aalborg Universitet, 9220 Aalborg (DK)
(72) Inventor: Bozhevolnaya, Elena, 9220 Aalborg O (DK); Lyckegaard, Anders, 9000 Aalborg (DK); Jakobsen, Leif, 9210 Aalborg SO (DK); Thomsen, Ole Thybo, 9530 Stovring (DK)
(74) Representative: Gregersen, Niels Henrik

(57) **Abstract**

The present invention relates to a sandwich panel comprising a front face plate (2), a back face plate (3) and one or more core materials (4,5), where said front face plate and said back face plate are interconnected by said core materials, where a number of different core inserts, and/or fasteners (51-55,58,59) are provided in connection to said sandwich panel, where boundaries between said core inserts and/or fasteners and said core material terminate at an angle, preferably of 90 degrees, in relation to said face plates, and/or where a number of joints, shaped by complementary surfaces of said core materials, terminate at an angle, preferably of 90 degrees, in relation to said face plates, wherein said core materials and/or said core inserts are provided with a structural grading and/or shaping of said boundaries and/or said joints.

The present invention furthermore relates to a method for producing such a sandwich panel.

## Description

### Scope of the invention

The present invention relates to a sandwich panel comprising a front face plate, a back face plate and one or more core materials, where said front face plate and said back face plate are interconnected by said core materials, where a number of different core inserts, and/or fasteners are provided in connection to said sandwich panel, where boundaries between said core inserts and/or fasteners and said core material terminate at an angle, preferably of 90 degrees, in relation to said face plates, and/or where a number of joints, shaped by complementary surfaces of said core materials, terminate at an angle, preferably of 90 degrees, in relation to said face plates.

The present invention furthermore relates to a method for producing a sandwich panel.

### Background of the invention

Sandwich panels are used in any area where it is important to obtain a high weight-to-strength ratio, for example for the manufacturing of ships, airplanes, automotive vehicles or buildings.

The advantage of a sandwich panel is that it comprises stiff front and back panels, which are interconnected with a light core material, whereby the sandwich panel obtains strength and stiffness equal to that of a solid plate, but with reduced weight in comparison to a solid plate of the same physical dimensions.

Further optimisation of the strength-to-weight and stiffness-to-weight ratios, whereby the functionality of the sandwich panel is significantly increased, is impossible without the use of different core materials with various densities in the same sandwich panel.

The use of one or more core materials may cause problems with the strength of the sandwich panel in the joint section between two different core materials, and therefore it is necessary to provide means for connecting said two different core materials.

To use a sandwich panel efficiently in a construction, it is necessary to provide for example fasteners for attachment or rigging purposes for different appliances, such as engines, masts, cable ducts, etc.

These appliances are typically influenced by for example pressure, tractions or vibrations, which will be transferred into the sandwich panels and transformed into shear forces at the boundaries between the core inserts and the core materials, or at the joints between different core materials.

The shear forces inevitably cause local stresses in the adjoining materials at the boundaries. These stresses are induced by the presence of material discontinuities, and they are proportional to the ratio of the shear moduli of the adjoining materials.

Thus, the larger the difference between the elastic properties of the adjoining materials is, the higher are the additional local stresses in the vicinity of the joint. This may seriously jeopardize the structural integrity of the whole sandwich assembly.

Sandwich structures easily fail when subjected to concentrated loads whereby local bending effects are induced in the vicinity of points of geometric and material discontinuities.

The reason for this is that, although sandwich structures are well suited for the transfer of overall bending and shearing loads, localized shearing and bending effects induce severe through-thickness shear and normal stresses in the core material.

These through-thickness stress components can be of significant magnitude, and may in many cases approach or exceed the allowable stresses in the core material as well as in the interfaces between the core and the face sheets.

Accordingly, it is necessary to use for example core inserts, stiffeners or backing plates to avoid premature failure of the soft core materials, as well as to redistribute the external shear load over a larger area of the sandwich panel, thereby locally reducing the induced stresses at the boundaries between adjoining materials.

This will ensure that the core inserts and/or joints can comply with the stresses without damaging the core material.

In the known and conventional designs of sandwich panels, described in for example the Japanese patent application JP 200-282652, an insert is provided with a backing plate, where the boundaries between the core material and inserts are at 90 degrees angles relative to the front and back plates, and where the back plate distributes the strains from the connection member to the sandwich panel.

Because of the 90 degrees angles of the boundaries between the core material and the inserts relative to the front and back plates, the shear forces are high and the strengths of the boundaries are relatively low. Thus, there is risk that the traction or pressure forces applied will cause damage and eventually complete failure of the sandwich panel.

In the British patent GB 2017857 an insert is shown with flanges at the front and back plates. The disadvantage of this design is that any pressure or traction will increase the risk for compressing and deforming the boundaries of the core material, whereby the strength of the construction around the insert is reduced.

### Object of the invention

It is the object of the present invention to provide a sandwich panel with a high weight-to-strength ratio, where joints in the core material and the core inserts are formed to provide enhanced strength against any external traction or pressure force applied by enlarging the transition zones of the resulting shear forces in the joints or boundaries of the core materials.

This is obtained with a sandwich panel according to the preamble of claim 1, and wherein said core materials and/or said core inserts are provided with a structural grading and/or shaping of said boundaries and/or said joints.

A further object of the present invention is to provide a method for producing a sandwich panel.

### Description of the invention

In the following:
- a joint is an area where either complementary surfaces of two different adjoining core materials of dissimilar elastic properties are adjoined, or complementary surfaces of the same core materials are adjoined with an adhesive component,
- a boundary is an area where complementary surfaces of adjoining core materials and core inserts are adjoined with an adhesive component,
- a fastener is a structure attached to the sandwich plate, wherein an external component can be attached to the sandwich panel,
- a core insert is a piece of a stiff core, plywood, wood, polymeric material, metal or the like, which substitutes a part/amount of the original core in the sandwich panel with the purpose of achieving a local reinforcement of the panel in order to introduce external transverse loads via fasteners. In the literature, the core insert is often called a stiffener or a backing/reinforcing plate.
- a reinforcing patch is an excessive amount of adhesive or glue or some polymeric compound (liquid during the production phase), which substitutes part of the core at the upper and lower parts of the joint bordering with the front and back face plates, and thereby locally reinforces the face plates and thus suppresses severe local stresses in the core in the vicinity of joints.
- a through-the-thickness insert is an insert penetrating the sandwich panel, wherein an external component can be attached to the sandwich panel.

All sandwich panels are designed with a front plate, a back plate and at least one core material. If the sandwich panel is provided with more than one core, it is possible that some core parts are made of different materials with different materials properties, such as elasticity.

Because the fasteners are influenced by for example pressure, tractions or vibrations, they are attached to the sandwich panel in areas with core inserts, stiffeners, backing plates, filler cavities or patch cores, which all have an enhanced strength in comparison to the soft core material.

To redistribute the external shear load onto the large area of the sandwich panel, the core material is designed with a structural grading of the core material and/or a structural shaping of the core material.

To ensure the strength of the sandwich panel in areas with boundaries or joints, it is necessary that the shape of the surfaces of the core insert or core material is complementary to the shape of the surfaces of the adjoining core insert or core material, thereby ensuring a tight fastening of the fasteners to the sandwich panel.

Gaps are not allowed between the core insert and the adjoining core material, since it will immediately lead to failure of the structure even at very small loads.

Where the sandwich panels are joined, there will be a joint between the core materials of the two sandwich panels. To increase the strength of the joint, and to prevent the occurrence of premature failure, the joint is designed with a structural shaping, or the core material is provided with a structural grading.

A structural grading of the core material is for example a graded change of the elastic properties extending from the borders and into the interior of the core material.

A structural shaping of the core material is for example where the boundary of the core material has a specific linear or curved shape or a combination of these shapes.

It is known that there is a high risk of preliminary and highly undesirable structural failure of sandwich panels where two adjacent materials are joined with a boundary/joint terminating at 90 degrees in relation to the face plate.

The reason is that, at the boundaries/joints, the external transverse (shear) loads transform into internal shear forces in the core material, thereby giving rise to local stresses induced by the presence of the material discontinuities near the boundary/joint.

In one embodiment of the present invention, said boundaries and/or said joints, at least on one part, terminate at an angle different from 90 degrees in relation to said face plates.

The part of the boundaries or joints having an angle different from 90 degrees in relation to said face plates will increase the transition zone for the resulting shear force, and, consequently, reduce the magnitude of the additional local stresses induced near the joints due to the material discontinuity. Thereby the strength of the boundaries or joint is significantly increased.

In a second embodiment of the present invention, said angle is varied throughout the thickness of said core materials and/or said core inserts. This provides a smoother distribution of the elastic properties of the adjoining materials and lower local stresses at the boundaries.

The joints or boundaries can have a curved form or be an assembly of straight lines with angles different from 90 degrees relative to said face plates or a combination of both.

If the joint or boundary is V-formed, any angle of the joint/boundary will improve the stress distribution at the joint/boundary. The connecting acute angle has the effect that as the angle becomes sharper, there will be a pronounced favourable effect on the joint/boundary.

However, very sharp angles should be avoided because sharp noses of soft cores may fail and be impractical in production. A recommended interval of the angle is 30-75 degrees.

In a third embodiment of the invention, said core materials and/or said core inserts are provided with a number of apertures that provide the boundary area with smoothly varying material properties such as elasticity.

The apertures can be microscopic circular holes machined in the stiff material and situated transversely or in-plane, parallel to the boundaries in the case of rectangular core inserts, and transversely along the radii in the case of circular core inserts.

The apertures provide the boundary with gradually varying elastic properties of the stiff core material towards the boundary, and this smoothens the local stresses appearing in the transition zone between the two different materials, and increases the strength of the joints/boundaries.

The size of the aperture should be larger than the characteristic size of the pores of the core material, and sufficiently smaller (approximately 10 times) than the characteristic size of the sandwich panel (same thickness of the core material).

Preferably the form of the aperture is cylindrical, but it may alternatively be polygonal.

In a further embodiment of the invention, said core material furthermore comprises one or more patch cores, where the boundaries between said patch cores and said core material terminate at an angle different from 90 degrees in relation to said face plates.

The practical purpose of using patch cores is to diminish material discontinuity at the border between two materials with different elastic properties. Any difference in the elastic properties causes local effects at the border that manifest themselves in an abrupt rise of local stresses in the face plates, as well as in the core material near the joint.

The larger the difference in elastic properties is, the more severe these local stresses will be. Introducing a patch core with intermediate elastic properties leads to a smoothening of the material discontinuities, and consequently the local effects are reduced in magnitude near the boundary.

In an another embodiment of the invention, said joints of said core materials are provided with one or more reinforced patches that are connected to one of the said face plates.

A reinforced patch substitutes part of the core at the upper and lower parts of the joint border with the front and back face plates and thereby locally reinforces the face plates. Thus it suppresses devastating local stresses in the core in the vicinity of the joints.

In yet an another embodiment of the invention, one or more through-the-thickness inserts are provided for penetrating said sandwich panel, and here boundaries between said through-the-thickness inserts and said core material terminate at an angle different from 90 degrees in relation to said face plates.

The invention can be used in connection with joints between different core materials in a sandwich panel, or backing plates used for the implantation of fasteners, or rigid metallic or polymeric material through-thickness inserts, or filled cavities used for the implantation fasteners.

There is no limitation to the thickness of the sandwich panel with regard to the considered problem of the core joints. A sandwich panel has a definite ratio between the thickness of the faces and the core, typically in the range t_{face}/t_{core} ∼ 1/5 -1/10, but the absolute thickness of the panel is of no significance.

Sandwich panel thicknesses in practice may range from a few millimetres (for instance in spacecraft applications) up to 0.3-0.4 metres (in some building applications). The complementary thicknesses of face plates observed in practice lie in the range from tenths of millimetres to several centimetres, depending on the specific application.

Core thicknesses may in practice range from a few millimetres to 0.3-0.4 metres, again depending on the specific application. Irrespective of the particular application, for example aerospace, marine, or automotive applications, and irrespective of the specific panel thicknesses or other characteristic parameters, inserts are widely used in order to accommodate fittings, fasteners, etc.

As such, the invention can be used in any construction/application or structural assembly involving sandwich panels/structures, i.e. in any construction/application or structural assembly where it is necessary to obtain high strength-to-weight ratios as well as high stiffness-to-weight ratios.

Sandwich structures are already successfully used for a variety of structural load-carrying applications such as spacecrafts, aircrafts, trains, cars/trucks, wind turbine blades, boat/ship superstructures, boat/ship hulls, civil engineering structures such as bridges and buildings, cargo containers (including refrigerated containers), and many others.

Common to the aforementioned applications is that the severe requirements with regard to low structural weight, and at the same time very high stiffness and strength properties, derive from or are accompanied by requirements regarding low energy/fuel consumption, crash worthiness and passenger safety, high resistance against buckling, high resistance against corrosion, thermal insulation capacity and thermal directivity, high dampening and energy dissipation capacity, fire resistance, etc.

The potential for the application of sandwich panels/structures for other than the applications mentioned is tremendous, and among specific potential applications, the following should be mentioned:
- furniture, such as tables, shelves, room dividers, cupboards, etc.
- kitchen appliances, such as a freezers, coolers, cooling boxes, etc.
- solar panels
- fixed wing wind sails for ships for high-efficiency/low energy consumption transportation of cargo and passengers,
- cardboard products (boxes, containers, etc.)

To produce a sandwich panel according to the present invention, the method comprises the following steps:
a) either said front face plate or said back face plate are positioned with an outer surface downwards,
b) the upwards facing surface of said face plate is provided with an adhesive,
c) said core materials or said core inserts or said patch cores or a combination of these are placed upon the upwards facing surface and adhered together,
d) the upwards facing surface of said core materials or said core inserts or said patch core or a combination of these are provided with an adhesive,
e) said front face plate or said back face plate is positioned upon the upwards facing surface.

Alternatively, the sandwich panel can be produced with the wanted core material according to the aforementioned method, followed by a step where holes are cut in either of the face plates and through the core materials, upon which the cut "plugs" of the core material are removed and replaces with either another core material or core insert.

If the sandwich panel is provided with reinforcing patches, the aforementioned method is provided with a step by which the reinforcing patches are applied to the joints between the materials and/or core inserts.

### Short description of the drawings

The invention will be described in more detail below with reference to the accompanying drawing in which
- Fig. 1: shows a conventional design of reinforcing inserts in a sandwich panel,
- Fig. 2: shows a conventional design of joints of various cores in a sandwich panel,

- Fig. 3: shows different types of core joints in a sandwich panel according to the invention,
- Fig. 4: shows a conventional design of a stiffener/backing plate in a sandwich panel,
- Fig. 5: shows different designs of inserts (stiffener/backing plate) according to the invention,
- Fig. 6: shows a conventional design of joints of various cores in a sandwich panel,
- Fig. 7: shows different designs of types of core joints with reinforcing plates according to the invention,
- Fig. 8: shows a sketch of a sandwich panel being centrally loaded and analysed by means of the Finite Element Analysis,
- Fig. 9: shows a graph of the distribution of the normal stresses in the front and back face plates of the sandwich panel along the joint of two core materials where the joint is situated at a distance of 120 mm from the centre of the panel,
- Fig. 10: shows a graph of the distribution of the transverse normal stresses in the core at the upper (front) and lower (back) face-core interfaces, where the joint is situated at a distance of 120 mm from the centre of the panel,
- Fig. 11: shows a sketch of central loading of sandwich panels having a conventional 90 degrees joint, and central loading of sandwich panels having reinforcing patches,
- Fig. 12: shows a graph of load versus displacement for two types of sandwich panels.

### Detailed description of the invention

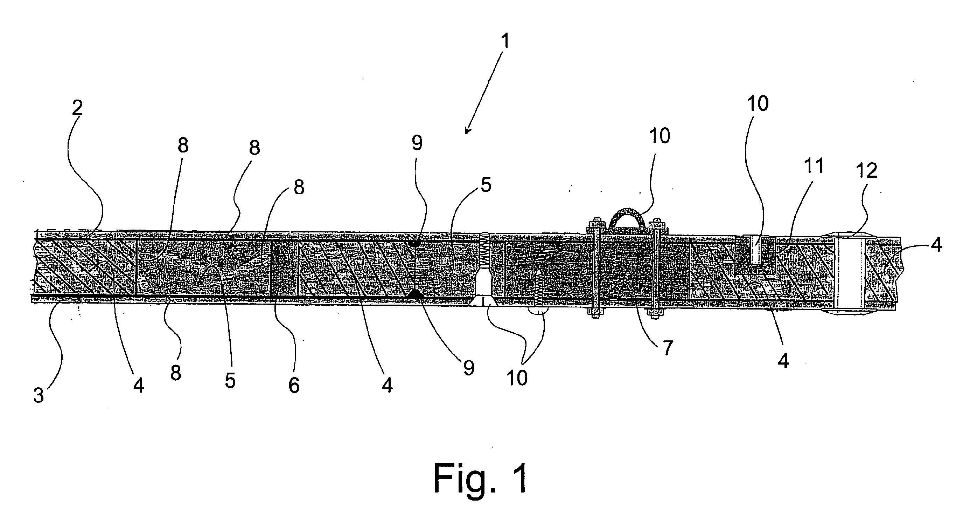

Fig. 1 shows a conventional design a sandwich panel 1, a front face plate 2, a back face plate 3 and one or more core materials 4, 5, where said front face plate 2 and said back face plate 3 are interconnected by said core materials 4, 5.

The core materials 4, 5, the patch core 6 and core inserts 7 are connected together and/or to the front face plate 2 and the back face plate 3 with an adhesive layer 8.

Between the end surfaces of core material 4, 5 reinforcing patches 9 are placed which locally reinforce either the front face plate 2 or the back face plate 3.

Different types of fasteners 10 are shown that are applied in the sandwich panel 1 for attachment or rigging purposes for different appliances, such as engines, masts, cable ducts, or the like.

It is shown how a fastener 10 is applied in a filler cavity 11, and how a through-the-thickness insert 12 is applied in the core material 4.

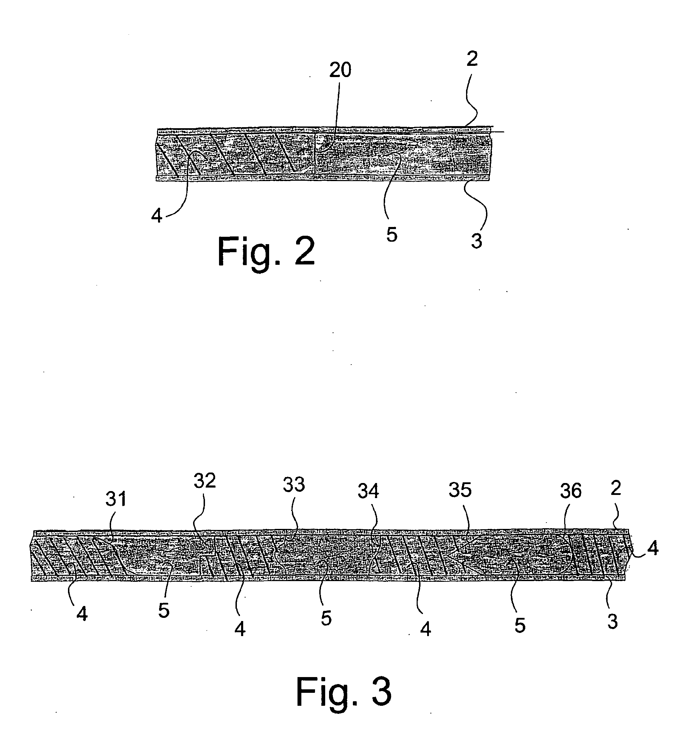

Fig. 2 shows a conventional design of a joint 20 between the first core material 4 and the second core material 5. The joint 20 is formed in one part, which is linear and runs from the front plate 2 to the back plate 3 at an angle of 90 degrees in relation to the front plate 2 and the back plate 3.

Fig. 3 shows different types of joints 31, 32, 33, 34, 35, 36 between the first core material 4 and the second core material 5 where said joints 31, 32, 33, 34, 35, 36 all run from the front plate 2 to the back plate 3, and at least on one part terminate at an angle different from 90 degrees in relation to said front plate 2 and said back plate 3.

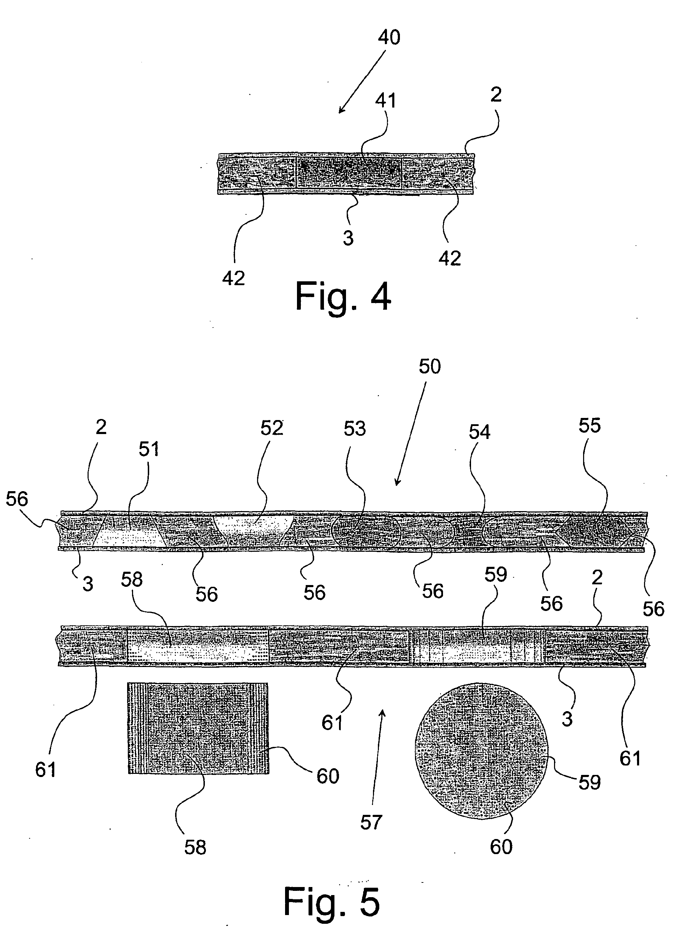

Fig. 4 shows a conventional design of a sandwich panel 40 with an insert in the form of a stiffener/backing plate 41 placed between the front plate 2 and the back plate 3 and between two parts of the core material 42 and with end surfaces that terminate at an angle of 90 degrees in relation to said front plate 2 and said back plate 3.

Fig. 5 shows a sandwich panel 50 with different designs of inserts (stiffeners/backing plates) 51, 52, 53, 54, 55 placed between the front plate 2 and the back plate 3 and between parts of the core material 56 and with end surfaces that terminate at angles different from 90 degrees in relation to said front plate 2 and said back plate 3.

Fig. 5 furthermore shows a sandwich panel 57 with different designs of inserts (stiffeners/backing plates) 58, 59 placed between the front plate 2 and the back plate 3 and between parts of the core material 61 and with apertures 60 in the boundary area of the inserts (stiffeners/backing plates) 58, 59.

Insert 58 is a square stiffener/backing plate where the apertures 60 are positioned in rows transversely and preferably parallel to the surface of the front plate 2 and the back plate 3.

Insert 59 is a circular stiffener/backing plate where the apertures 60 are positioned radially in rows and preferably run through the thickness of the insert 59.

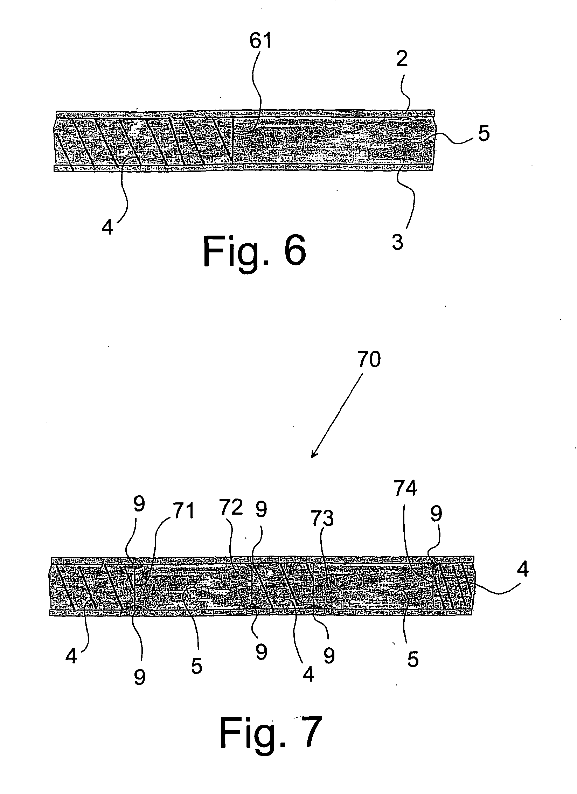

Fig. 6 shows a conventional design of a joint 61 between the first core material 4 and the second core material 5. The joint 61 is formed in one part that is linear and runs from the front plate 2 to the back plate 3 at an angle of 90 degrees in relation to the front plate 2 and the back plate 3.

Fig. 7 shows a sandwich panel 70 with different types of core joints 71, 72, 73, 74 between parts of core materials 4, 5 where each of the. core joints 71, 72, 73, 74 is provided with at least one reinforcing patch 9.

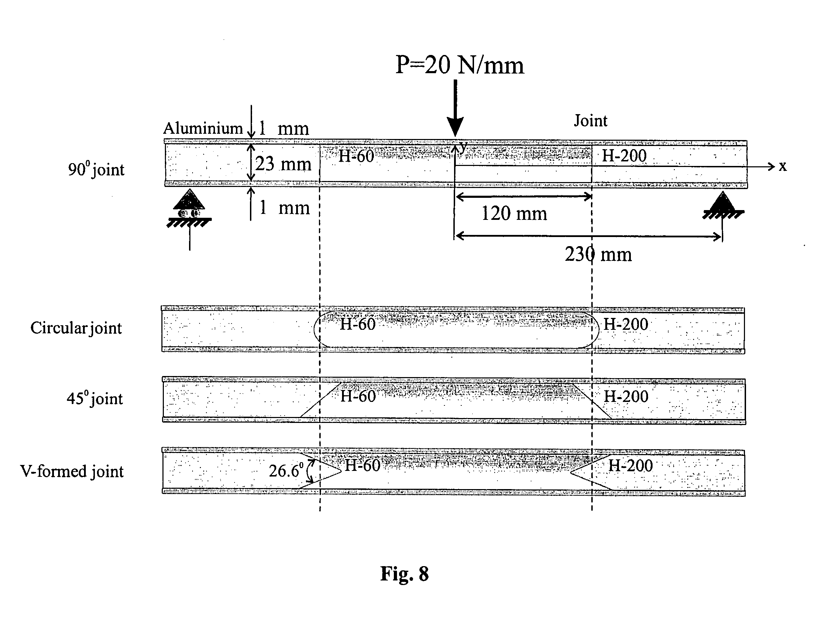

The following description of examples relates to Figs. 8-12.

### Example 1: Finite Element Analysis of the stresses in the vicinity of joints of different core materials in sandwich panels

The sandwich panel shown in Fig. 8 consists of two aluminium face plates and two types of PVC core materials, i.e. Divinycell H60 and Divinycell H200 (DIAB AB Group).

Divinycell H60 constitutes the middle part of the panel, while Divinycell H200 constitutes its edges. The mechanical characteristics of the panel constituents are given in the table below.

| | |
|---|---|
| Modulus of elasticity of aluminium face plates | 70 GPa |
| Modulus of elasticity of a softer core, Divinycell H60 | 60 MPa |
| Modulus of elasticity of a stiffer core, Divinycell H200 | 290 MPa |

The panel is simply supported at its ends and centrally loaded with a force P=20 N/mm.

Various shapes of the core joints are considered as illustrated in Fig. 8. They are a conventional 90 degrees joint as well as circular, 45° and V-formed joints.

The largest bending moment is in the middle of the panel at x=0 and decreases linearly to the edges (where x=230 mm). If local effects in the vicinity of joints of different core materials are disregarded, the same behaviour for the normal stresses in the face plates of the panel would be expected: the face stresses are highest in the middle and decrease linearly to zero at the edges of the panel.

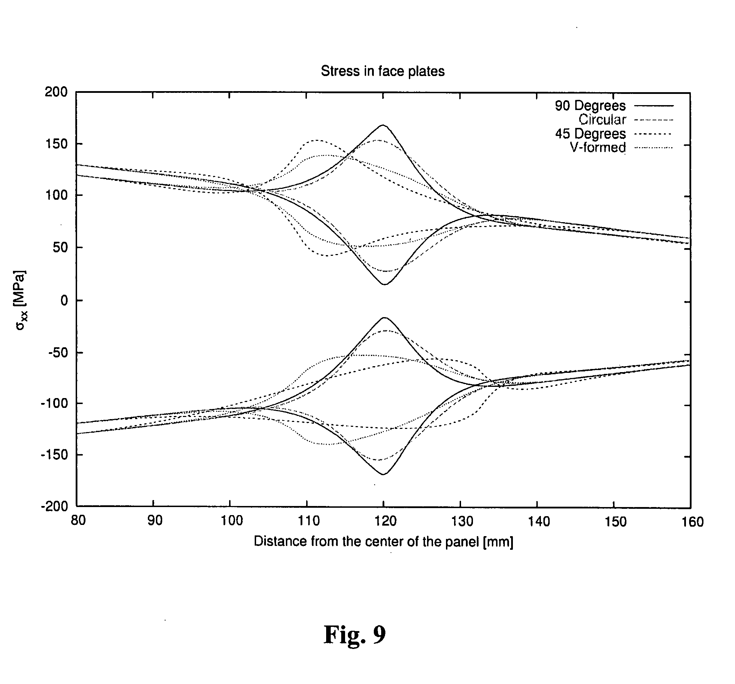

Fig. 9 illustrates calculated stresses in the upper loaded (front) and lower (back) face plates in the vicinity of the joint situated at a distance of 120 mm from the loading point. Note that the front face is in compression (lower family of curves in Fig. 9) and the back face is in tension.

For each face plate there are two curves: one describes the stresses at the outer surface of the face, and the second describes the stresses at the face-core interface. The difference between the outer and inner stresses is not large because of a fairly thin thickness of each face plate, but this tendency is violated at the core joints where local peaks of the face stresses are observed.

According to the classic approach one would expect stresses σₓₓ ~ ±100 MPa at distance of 120 mm, but they achieve values of ±170 MPa due to the discrepancy between the elastic properties of the cores at the joint.

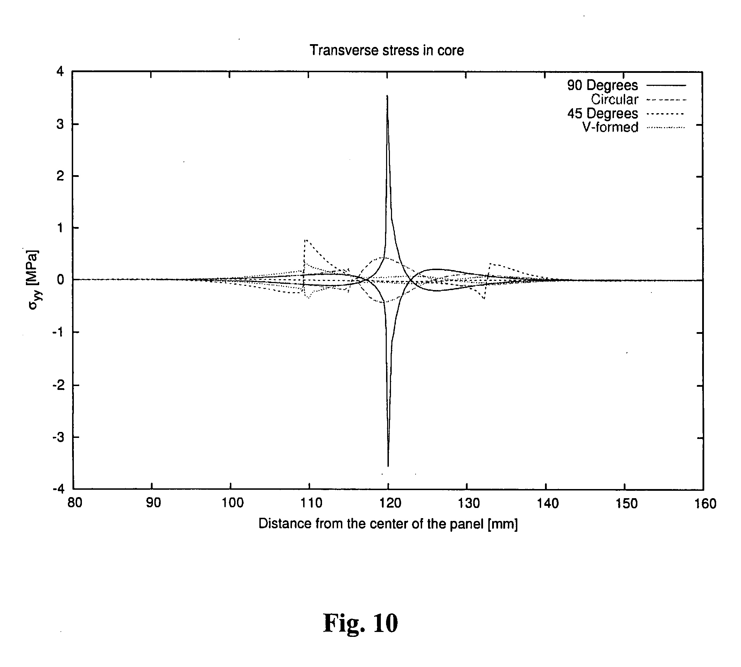

Similar local effects are present in the core of the panel, the most conspicuous of these being the normal stresses occurring in the core when different core materials are joined together. This is shown in Fig. 10 with regard to the upper and lower face-core interfaces. The joints of different cores give rise to transverse normal stresses in the core that would be completely absent in a panel having a uniform core.

Note that in areas far from the joint, both in the soft and stiff cores, i.e. x<95 mm and x>145 mm, the transverse stresses are eliminated.

The transverse normal stresses in the core constitute a very critical point in the sandwich panel because they may initiate a delamination of the face plate and the core, which will jeopardize the integrity of the structure.

The shape of the joint has a very large effect on the maximum value of the normal stresses in the core, as illustrated in Fig. 10.

Both a wedge joint of 26.6 degrees and a circular joint allow the maximum value of σ_{yy} to be no larger than 0.5 MPa, which is 7 times smaller than the maximum stress of 3.6 MPa in the conventional 90 degrees joint.

### Example 2: Experimental study of the maximum strength of sandwich panels with 90 degrees joints and sandwich panels with reinforcing patches in the joints

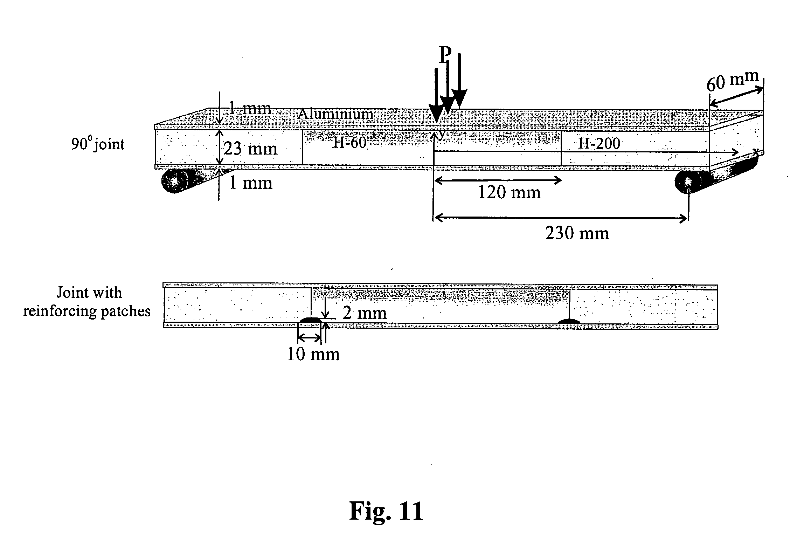

Two types of sandwich panels were experimentally studied in a static three-point bending, one panel having a 90 degrees joint and the second panel having a 90 degrees joint with reinforcing patches, cf. Fig. 11.

Face plates made of aluminium 7075-T6 (Aluminium Company of America). Divinycell H60 constitute the middle part of the panel, while Divinycell H200 (DIAB AB Group) makes up its edges.

All geometric parameters of the panels are given in Fig. 11. Their mechanical characteristics appear from the table above.

Two-component epoxy resin adhesive system Araldite® 2000 (Huntsman Advanced Materials) was used both for the attachment of the face plates to the core, and for adjoining different core materials at the joints.

Reinforcing patches were produced by machining segment-like grooves at the joints and by filling them with the same adhesive.

In the experiment, the panels were subjected to a central load P until they broke. Loading velocity was 0.05 mm/sec.

Three panels of each type were manufactured, and their maximum strength was assessed by recording the applied load and displacement of the central part of the panel.

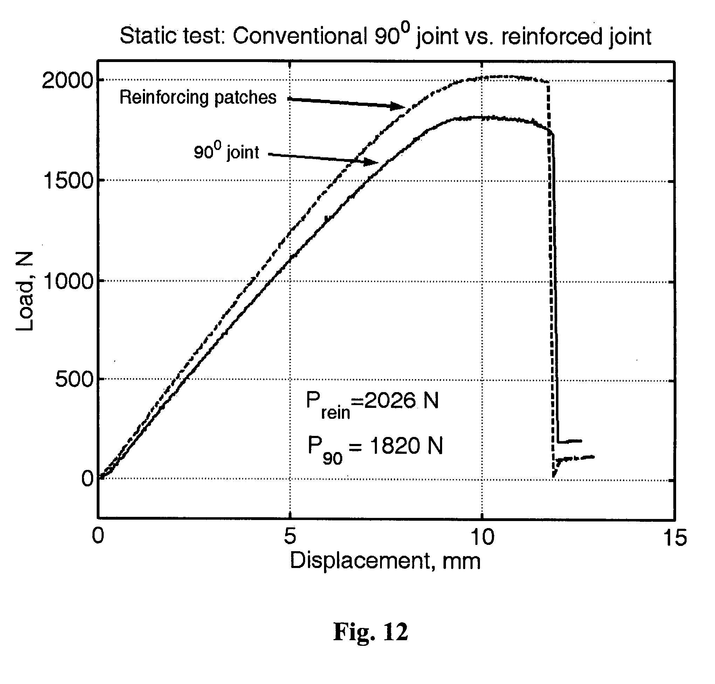

The average characteristics of the panels having 90 degrees joints and the panels having reinforced joints are shown in Fig. 12.

The maximum critical load for the panel with reinforced joints is approximately 10% higher than is the case for a conventional panel

It should be mentioned that the fracture in the case of the panels having a 90 degrees joint always started from the joint, while the presence of the reinforcing patches forced fractures to start in the softer core material and at higher loads.

This proves that the junction is a vulnerable element in a sandwich structure, but it can be reinforced by simple local strengthening of the faces at the spots neighbouring the core joints.

Note that shape and dimensions of the reinforcing patches were not optimised. This can be done by using for example Finite Element Analysis, whereby the static critical strength of the sandwich panel can be further increased.

### Materials of the invention

Below follows examples of materials suitable for use with the invention.

### Non-exclusive list of widely used types of face plate materials

- Steel and steel alloys.
- Stainless steel.
- Aluminium and its alloys.
- Titanium and its alloys.
- Plywood.
- Polymer materials.
- Polymer-based fibre-reinforced materials.
- Glass-fibre reinforced polymers (so-called GFRPs).
- Carbon-fibre reinforced polymers (so-called CFRPs).
- Aramid (Kevlar)-fibre reinforced polymers.
- Fibre-reinforced polymers with combinations of the fibre types and systems mentioned above (so-called hybrid composite materials).

The polymer-based fibre-reinforced materials mentioned are provided by a large number of different manufactures under a very large number of names and trade marks. In addition, the aforementioned fibrous composite materials systems can be manufactured using several fundamentally different manufacturing/processing techniques including hand lay-up, prepreg technology and various resin moulding transfer (RTM) and vacuum-assisted resin moulding transfer (VARTM) techniques.

### Examples of commercially available face plate composite material systems:

- Glass-fibre reinforced laminates (fabrics/mats) from Ahlstrom Corp.
- Prepregs (reinforced Aramid, Carbon, Glass fibres/fabrics into which a pre-catalysed resin system has been impregnated by a machine) from SP Systems.
- SPRINT® glass and carbon fibre composite systems from SP Systems.
- Prepreg systems with carbon, aramid or glass-fibre embedded in epoxy, phenolic, bismaleimide (BMI) or cyanate polymer resins from Hexcel Composites.
- Prepreg and fibre (carbon/graphite, glass, aramid) and resin material (epoxy, phenolic, thermoplastic) systems from Owens Corning.

### Non-exclusive list of widely used types of core materials:

- Aluminium honeycomb core materials.
- Aramid honeycomb core materials.
- Polymeric foam core materials including:
   - Cross-linked and linear PVC foams.
   - Polymethacrylimide (PMI) foams.
   - Polyurethane foams.
   - Balsa wood core materials.

### Examples of commercially available sandwich core materials:

- Divinycell® , Klegecell® , PVC and polyurethane polymers based foams from DIAB AB Group.
- ProBalsa®, end-grain balsa woods from DIAB AB Group.
- CoreCell®, styreneacrylonitrile polymer based foams from SP Systems.
- DuraKore™, SuperLite™ - end-grain balsa wood from Alcan Airex Baltek Corp.
- Rohacell® PMI foam core from Rohm GmbH & Co. KG.
- HexWeb® aluminium honeycomb core materials from Hexcel Composites.
- Nomex® aramid honeycomb core materials from DuPont.
- PAMG-XR1 5052, 5056, 3003, aluminium honeycomb core from PLASCORE.
- PP30, PP40, polypropylene honeycomb core from PLASCORE.
- DUFAYLITE, paper honeycomb from DUFAYLITE.
- TRICEL, phenolic resin impregnated paper honeycomb from TRICEL Honeycomb Corp.
- Lantor Coremat, nonwoven core from Lantor BV.

### Non-exclusive list of widely used types of structural adhesives:

- Epoxy
- Polyurethane
- Polyester
- Cyanoacrylate
- Phenolic
- Acrylic.

Structural adhesive materials systems are provided from a very large number of manufacturers that produce and market an even larger number of commercial adhesive systems based on many different polymers systems and technologies.

### Examples of commercially available adhesive material systems:

- Araldite® epoxy-based adhesive systems from Huntsman Advanced Materials.
- Redux® vinyl phenolic and epoxy-based adhesive systems from Hexcel Composites.
- CORE-BOND®, POLY-BOND®, POLY-FAIR®, polyester-based from SP Systems.
- Pro-Bond, Divilette ® , polyester-based from DIAB AB Group.
- SUPRASEC® and DALTOREZ®, polyurethane-based from Huntsman Advanced Materials (under the names JEFFOL® and RUBINATE® in America).
- Methacrylate based adhesives from EpoxySystems™.
- SikaFlex® and SikaForce® polyurethane adhesives from Sika AG.
- FM-series® of epoxy-based adhesive film systems from American Cyanamide.
- 3M™ product range of acrylic-based structural adhesives from SysCon Technology Inc.

## Claims

1. Sandwich panel comprising a front face plate, a back face plate and one or more core materials, where said front face plate and said back face plate are interconnected by said core materials, where a number of different core inserts, and/or fasteners are provided in connection to said sandwich panel, where boundaries between said core inserts and/or fasteners and said core material terminate at an angle, preferably of 90 degrees, in relation to said face plates, and/or where a number of joints, shaped by complementary surfaces of said core materials, terminate at an angle, preferably of 90 degrees, in relation to said face plates, **characterised in that** said core materials and/or said core inserts are provided with a structural grading and/or shaping of said boundaries and/or said joints

2. Sandwich panel according to claim 1, **characterised in that** said boundaries and/or said joints, at least on one part, terminate at an angle different from 90 degrees in relation to said face plates.

3. Sandwich panel according to claim 2, **characterised in that** said angle is varied throughout the thickness of said core materials and/or said core inserts.

4. Sandwich panel according to claim 1, **characterised in that** said core materials and/or said core inserts are provided with a number of apertures.

5. Sandwich panel according to claim 1, **characterised in that** said core material furthermore comprises one or more patch cores, and where boundaries between said patch cores and said core material terminate at an angle different from 90 degrees in relation to said face plates.

6. Sandwich panel according to claim 1, **characterised in that** said joints of said core materials are provided with one or more reinforced patches that are connected to one of either said face plates.

7. Method for producing a sandwich panel according to any of the preceding claims, **characterised in that** said method comprises the following steps:
a) either said front face plate or said back face plate are positioned with an outer surface downwards,
b) the upwards facing surface of said face plate is provided with an adhesive,
c) said core materials or said core inserts or said patch cores or a combination of these are placed upon the upwards facing surface and adhered together,
d) the upwards facing surface of said core materials or said core inserts or said patch core or a combination of these are provided with an adhesive,
e) said front face plate or said back face plate is positioned upon the upwards facing surface,
f) the whole sandwich panel is pressed together.
